# FASCICULE DE BREVET EUROPEEN

(11) **EP 0 619 509 B1**
(45) Date de publication et mention de la délivrance du brevet: **20.05.1998**
(21) Numéro de dépôt: 94400733.5
(22) Date de dépôt: 05.04.1994
(51) Int. Cl.: G02B 27/00, G02B 5/32, G01B 11/26

(54) **Dispositif de contrôle de la position et de l'orientation d'un miroir**
Spiegellage und -richtungs Kontrollvorrichtung
Mirror position and orientation control device

(30) Priorité: 09.04.1993 FR 9304260
(43) Date de publication de la demande: 12.10.1994
(73) Titulaire: SEXTANT AVIONIQUE, 92360 Meudon-la-Forêt (FR)
(72) Inventeur: Gerbe, Jean-Pierre, F-92402 Courbevoie Cedex (FR)
(74) Mandataire: Chaverneff, Vladimir

(56) Documents cités:
- EP-A- 0 287 032
- EP-A- 0 479 439
- EP-A- 0 526 067
- GB-A- 1 387 946
- GB-A- 1 451 310
- US-A- 4 439 755
- US-A- 4 712 851
- US-A- 4 775 218
- US-A- 5 274 479
- PATENT ABSTRACTS OF JAPAN vol. 9, no. 85 (E-308) & JP-A-59 215 644 (HITACHI) 5 Décembre 1984

## Description

La présente invention se rapporte à un dispositif de contrôle de la position et de l'orientation d'un miroir.

Lorsqu'un miroir mobile est utilisé dans un dispositif optique placé dans un environnement encombré, et que l'image réfléchie par ce miroir doit être positionnée avec une grande exactitude, il peut être difficile, voire impossible d'utiliser des moyens classiques de prélèvement d'image (capteur ou miroir de renvoi) pour fournir une valeur de la position et de l'orientation de ce miroir à son dispositif d'asservissement en position.

Ceci est en particulier le cas d'un collimateur tête haute dont le miroir de mélange est mobile. Un collimateur tête haute présente des images synthétiques et diverses informations superposées au paysage extérieur dans le champ de vision d'un pilote d'avion ou d'hélicoptère. Toutes ces informations servent au pilotage et doivent être placées précisément par rapport aux axes de l'aéronef.

Le système optique d'un tel collimateur est généralement constitué d'une optique de collimation et d'un miroir de mélange. Dans le cas d'un collimateur pour avion de transport, le miroir de mélange est généralement mobile afin de pouvoir être rangé dans les phases de vol pendant lesquelles le collimateur ne sert pas. Il est fondamental, pour des raisons de sécurité de vol, d'être sûr de l'orientation et de la position de ce miroir quand le collimateur est utilisé.

On connaît deux types de systèmes optiques pour collimateur:
- dans un premier type, le miroir de mélange est un miroir plan et assure uniquement le mélange d'images synthétiques avec le paysage. Dans ce cas, seule l'orientation du miroir est importante pour la précision de la superposition ;
- dans un second type, le miroir de mélange n'est pas plan et assure à la fois la collimation de l'image synthétique et son mélange avec le paysage. Dans ce cas, son orientation et sa position agissent sur la précision de la superposition.

On connaît d'après le brevet US 4 775 218 un système de détection d'orientation de miroir pour viseur tête haute basé sur le principe d'autocollimation. Ce système permet de mesurer l'orientation du miroir de mélange, mais ne fournit pas sa position. De plus, ce système fait appel à un miroir d'autocollimation annexe. La mesure ne se fait donc pas sur le miroir de mélange lui-même.

On connaît d'après la demande de brevet français 92 14 767 un dispositif de contrôle de position d'un miroir de viseur tête haute, dispositif faisant appel à un détecteur optoélectronique à diode à quatre quadrants détectant un point image généré par le collimateur lui-même. Ce dispositif est plus performant que le dispositif précité du fait qu'il permet de contrôler globalement toute la chaîne électro-optique de génération d'image, c'est-à-dire non seulement la bonne position du miroir de mélange, mais aussi toute la partie électronique et source d'image produisant les images. Cependant, ce dispositif nécessite de disposer physiquement le capteur dans le faisceau de rayons lumineux sortant du collimateur, tout en ne gênant pas la vision des images. Or, l'implantation d'un capteur ou d'un miroir de renvoi dans un dispositif tel qu'un viseur tête haute soit gêne fortement la vision, soit ne peut être réalisée.

On connaît d'après le document US-A-4 712 851 un appareil de positionnement et d'alignement de pièces optiques, mais cet appareil nécessite une source laser pour produire un faisceau de référence, que l'on ne peut absolument pas utiliser dans un équipement tel qu'un viseur tête haute.

La présente invention a pour objet un dispositif de contrôle de la position et de l'orientation d'un miroir qui soit facile à mettre en place, sans gêner la vision, et qui soit le plus précis possible.

Le dispositif de contrôle conforme à l'invention comporte au moins un élément holographique disposé sur une petite partie du miroir et déviant ainsi une petite partie d'un faisceau lumineux porteur d'images, après réflexion sur le miroir, vers un capteur correspondant disposé hors du champ de vision relatif au miroir, l'angle de Bragg de chaque élément holographique étant l'angle formé entre la direction dans laquelle le miroir réfléchirait en l'absence dudit élément holographique les rayons incidents et la direction du capteur correspondant.

La présente invention sera mieux comprise à la lecture de la description détaillée d'un mode de réalisation, pris à titre d'exemple non limitatif et illustré par le dessin annexé, sur lequel :
- la figure 1 est une vue simplifiée en perspective d'un viseur tête haute de l'art antérieur ;
- la figure 2 est une vue simplifiée en perspective d'un viseur tête haute comportant un dispositif de contrôle conforme à l'invention, et
- la figure 3 est une vue en coupe du dispositif de contrôle de la position et de l'orientation d'un miroir du viseur de la figure 2.

L'invention est décrite ci-dessous en référence à un viseur tête haute, mais il est bien entendu qu'elle n'est pas limitée à cette seule application, et qu'elle peut être mise en oeuvre dans différents autres dispositifs optiques dans lesquels on doit contrôler avec précision la position et l'orientation d'un miroir.

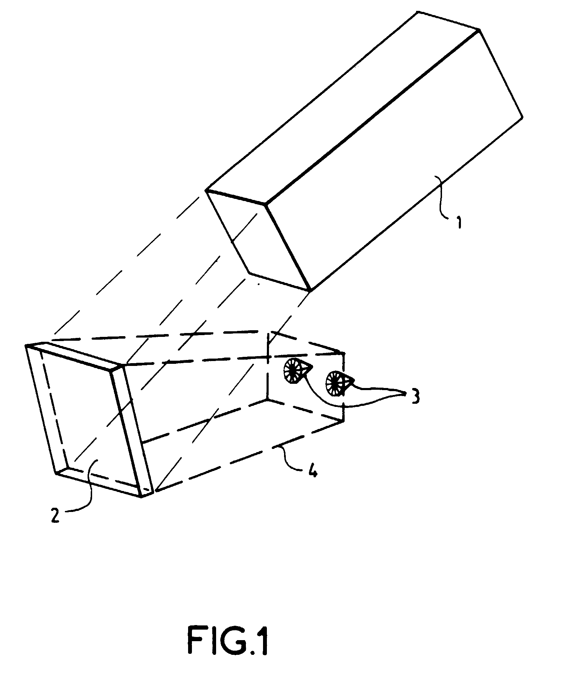

Le viseur tête haute schématiquement représenté en figure 1 comporte, de façon non représentée en détail, une source d'images synthétiques 1 (par exemple un tube cathodique) avec ses circuits électroniques de commande et un objectif de projection qui forme une image aérienne de la source au foyer d'un miroir sphérique de mélange 2. Celui-ci renvoie une image à l'infini en direction des yeux 3 de l'utilisateur. L'architecture du dispositif optique utilisé est dite à conjugaison de pupille et limite le faisceau de rayons sortant du collimateur à un volume (référencé 4 sur la figure 1) qui s'appuie sur une zone de dimensions réduites placée au niveau de la tête de l'utilisateur.

Si l'on voulait placer dans ce volume 4 un élément de mesure tel qu'un capteur opto-électronique ou un miroir de renvoi, on se heurterait à de grandes difficultés. En effet, si l'on plaçait cet élément de mesure près des yeux de l'utilisateur, il gênerait considérablement sa vision et créerait un danger pour sa tête. Si on plaçait cet élément près du miroir de mélange, il masquerait le faisceau de rayons issu de la source 1 avant que celui-ci n'arrive sur le miroir de mélange. En outre, il serait impossible d'utiliser un miroir annexe, car le miroir de mélange participe à la collimation, et l'élément de mesure doit donc être placé après ce miroir. Par conséquent, si l'on voulait mettre en oeuvre les solutions de l'art antérieur, on ne pourrait placer l'élément de mesure en un endroit où il pourrait à la fois capter les rayons nécessaires à la mesure et ne constituer aucune gêne.

Selon l'invention, on utilise un élément optique holographique qui dévie une petite partie du faisceau lumineux qui se réfléchit sur le miroir de mélange.

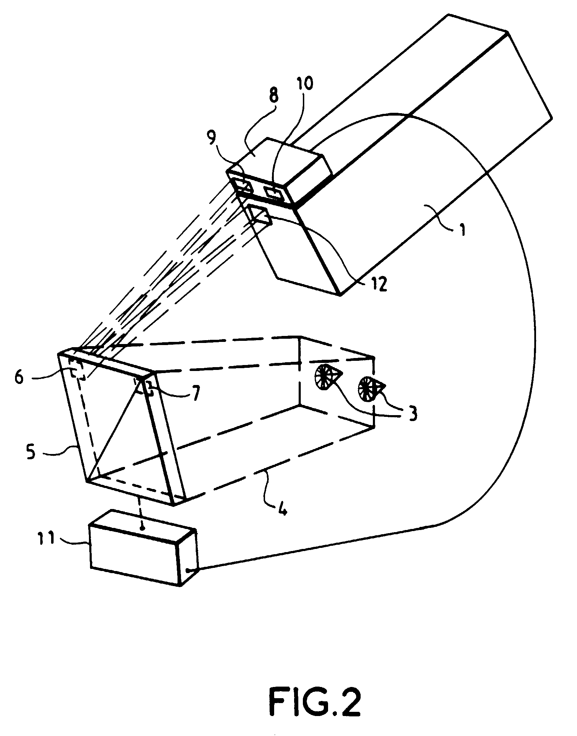

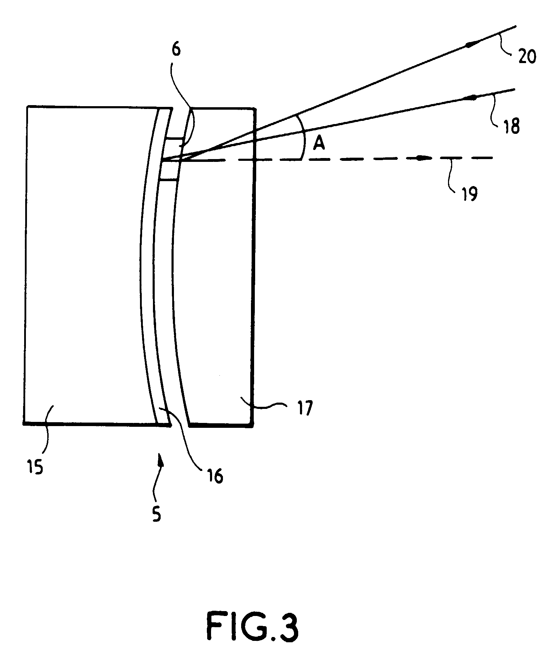

On a schématiquement représenté en figure 2 un viseur tête haute comportant un dispositif de contrôle conforme à l'invention. Les mêmes éléments que ceux du dispositif de la figure 1 y sont affectés des mêmes références numériques. Le miroir de mélange 5, qui remplace le miroir 2 et qui comporte au moins un élément optique holographique est décrit plus en détail ci-dessous en référence à la figure 3. Sur la figure 2, on a représenté deux tels éléments holographiques, référencés 6 et 7. Ces éléments 6, 7 sont formés ou disposés sur la face du miroir 5 tournée vers l'utilisateur, par exemple en haut de cette face, vers ses deux coins. On fixe sur la source 1, par exemple à sa partie supérieure, un dispositif de mesure et de contrôle 8 à capteurs optoélectroniques 9, 10 disposés en des positions correspondant à celles des éléments 6, 7. Les capteurs 9, 10 sont avantageusement du type à quatre quadrants décrit dans ladite demande de brevet français 92 14767 et sont précédés d'une lentille de focalisation (non représentée). Le signal de commande produit par le dispositif 8 est envoyé à un dispositif 11 d'asservissement en position et/ou en orientation du miroir 5 ou de la position de la source d'images 1. La réalisation du dispositif 8 est évidente pour l'homme de l'art à la lecture de la présente description, et ne sera pas décrite plus en détail. Le dispositif 11 est de type connu en soi, et ne sera pas non plus décrit. On a également représenté sur la figure 1 la zone 12 du faisceau de sortie de la source 1 qui illumine l'élément 6, et les trajets du faisceau incident 13 (issu de la zone 12) et du faisceau 14 sortant de l'élément 6 (pour simplifier le dessin, on n'a pas représenté les faisceaux relatifs à l'élément 7).

Le miroir 5 (figure 3) comporte un substrat de verre 15 qui est une portion de surface sphérique, dont la face tournée vers l'utilisateur porte un revêtement 16 semi-réfléchissant. Ce revêtement 16 est par exemple soit un hologramme, soit un dépôt en couches minces. L'élément holographique 6 (ou 7) est par exemple formé sur un substrat 17 en verre (ou en matériau transparent aux longueurs d'ondes utilisées), collé au miroir 5, du côté vu par l'utilisateur. Cet élément holographique est réalisé par enregistrement dans un matériau photosensible (par exemple de la gélatine bichromatée) des franges d'interférences créées par deux ondes planes faisant entre elles l'angle dont on veut dévier le faisceau (angle A défini ci-dessous).

Le dispositif optique décrit ci-dessus fonctionne de la façon suivante. Une partie du faisceau (celle correspondant à la zone 12) issu de la source 1, à savoir le faisceau 13, dirigé selon la direction 18, traverse l'élément 6 sans être affecté, car ce type d'élément holographique n'agit qu'à une longueur d'onde donnée (en l'occurrence celle correspondant aux franges d'interférences créées par les ondes planes ayant servi à enregistrer l'élément holographique) et à un angle d'incidence donné (selon la loi de BRAGG). Dans le cas présent, l'angle d'incidence de la direction 18 est, bien entendu, différent de celui donné par la loi de Bragg pour l'élément holographique en question. Le faisceau incident 13 se réfléchit sur la couche 16, et traverse l'élément 6 avec une direction initiale 19 (qui est celle du faisceau collimaté par le miroir 5 vers l'utilisateur). Cette direction initiale 19 correspond justement audit angle de Bragg. Par conséquent, au lieu de sortir de l'élément 6 selon la direction 19, le faisceau traversant cet élément 6 est dévié selon une direction 20, justement vers le capteur 9. Pour obtenir cette déviation, les deux ondes planes précitées, ayant servi à enregistrer l'élément holographique, font exactement entre elles l'angle A que l'on veut avoir entre les directions 19 et 20. L'hologramme n'étant efficace que dans une bande de longueurs d'onde très étroite, il ne gêne pas la vision du paysage en transmission à travers le miroir 5.

L'orientation du miroir 5 est ainsi très facile à déterminer grâce à la position de l'image formée par le faisceau 14 sur l'élément 9, de la façon décrite dans ladite demande de brevet français 92 14767. Si on utilise un deuxième élément holographique 7 (coopérant avec le détecteur 10 et fonctionnant de la même façon que l'élément 6), on peut contrôler, en plus de l'orientation du miroir, les dimensions de l'image qu'il collimate, et par conséquent, vérifier et corriger des variations.

Grâce au dispositif de l'invention, on peut donc contrôler la bonne ou mauvaise mise en place du miroir de mélange ainsi que toute autre erreur ou jeu du système optique, ou toute dérive des circuits électroniques entraînant un déplacement de l'image collimatée. Bien entendu, l'invention peut être mise en oeuvre avec d'autres types de miroirs (plans, entièrement réfléchissants, ...).

Selon un aspect avantageux de l'invention, afin de rendre invisible à l'oeil humain le (les) faisceau(x) servant à la mesure, on peut utiliser, dans la source 1, un tube cathodique dont une ou plusieurs petites zones (correspondant aux éléments 6 et 7) en bord de sa surface utile sont recouvertes d'un phosphore émettant dans l'infrarouge. Bien entendu, l'hologramme est alors adapté à la longueur d'onde infrarouge utilisée.

## Revendications

1. Dispositif de contrôle de la position et de l'orientation d'un miroir mobile (5) de système optique, miroir mobile utilisé pour réfléchir un faisceau lumineux produisant des images observées par un utilisateur, caractérisé par le fait qu'il comporte au moins un élément holographique (6, 7) disposé sur une petite partie du miroir et déviant ainsi une petite partie du faisceau lumineux, après réflexion sur le miroir, vers un capteur correspondant (9, 10) disposé hors du champ de vision relatif au miroir (4), et par le fait que l'angle de Bragg de chaque élément holographique est l'angle (A) formé entre la direction (19) dans laquelle le miroir réfléchirait en l'absence dudit élément holographique les rayons incidents et la direction (20) du capteur correspondant.

2. Dispositif selon la revendication 1, caractérisé par le fait que chaque élément holographique est enregistré sur une couche de matériau photosensible déposée sur un substrat (17) transparent aux longueurs d'ondes utilisées, collé au miroir.

3. Dispositif selon l'une des revendications précédentes, caractérisé par le fait que chaque capteur (9, 10) est un capteur optoélectronique du type à quatre quadrants.

4. Dispositif selon l'une des revendications précédentes, caractérisé par le fait que le miroir est un miroir mélangeur.

5. Dispositif selon la revendication 4, caractérisé par le fait que le miroir mélangeur est un miroir sphérique de collimation.

6. Dispositif selon la revendication 4 ou 5, caractérisé par le fait qu'il fait partie d'un viseur tête haute.

7. Dispositif selon la revendication 6, caractérisé par le fait que chaque capteur est relié à un dispositif (8, 11) d'asservissement en position et/ou orientation du miroir mobile ou de position de la source d'image.

8. Dispositif selon l'une des revendications précédentes, caractérisé par le fait qu'en correspondance de chaque élément holographique, la source d'images (1) comporte près du bord de sa surface utile une petite zone recouverte d'un phosphore émettant dans l'infrarouge.

## Patentansprüche

1. Vorrichtung zum Kontrollieren der Position und der Ausrichtung eines beweglichen Spiegels (5) eines optischen Systems, wobei der bewegliche Spiegel dazu verwendet wird, ein Lichtbündel zu reflektieren, welches von einem Benutzer betrachtete Bilder erzeugt, dadurch gekennzeichnet, daß sie wenigstens ein holographisches Element (6, 7) enthält, das auf einem kleinen Abschnitt des Spiegels angeordnet ist und somit einen kleinen Teil des Lichtbündels nach der Reflexion am Spiegel zu einem zugehörigen Sensor (9, 10) ablenkt, der außerhalb des dem Spiegel (4) zugeordneten Sichtfeldes angeordnet ist, und daß der Bragg-Winkel jedes holographischen Elements der Winkel (A) ist, der zwischen der Richtung (19), in welche der Spiegel die einfallenden Strahlen beim Fehlen des holographischen Elementes reflektieren würde, und der Richtung (20) des entsprechenden Sensors gebildet ist.

2. Vorrichtung nach Anspruch 1, dadurch gekennzeichnet, daß jedes holographische Element in eine Schicht aus lichtempfindlichem Material eingeschrieben ist, die auf ein Substrat (17) aufgebracht ist, das für die verwendeten Wellenlängen durchlässig und auf den Spiegel aufgeklebt ist.

3. Vorrichtung nach einem der vorhergehenden Ansprüche, dadurch gekennzeichnet, daß jeder Sensor (9, 10) ein optoelektronischer Sensors des Typs mit vier Quadranten ist.

4. Vorrichtung nach einem der vorhergehenden Ansprüche, dadurch gekennzeichnet, daß der Spiegel ein Mischspiegel ist.

5. Vorrichtung nach Anspruch 4, dadurch gekennzeichnet, daß der Mischspiegel ein sphärischer Kollimationsspiegel ist.

6. Vorrichtung nach Anspruch 4 oder Anspruch 5, dadurch gekennzeichnet, daß sie Teil einer "Head-Up"-Sichtvorrichtung ist.

7. Vorrichtung nach Anspruch 6, dadurch gekennzeichnet, daß jeder Sensor mit einer Vorrichtung (8, 11) zum Regeln der Position und/oder Ausrichtung des beweglichen Spiegels oder der Position der Bildquelle verbunden ist.

8. Vorrichtung nach einem der vorhergehenden Ansprüche, dadurch gekennzeichnet, daß die Bildquelle (1) in der Nähe des Randes ihrer nutzbaren Fläche jedem holographischen Element zugeordnet einen kleinen Bereich aufweist, der mit einem Leuchtstoff bedeckt ist, der im Infrarotbereich abstrahlt.

## Claims

1. Device for controlling the position and the orientation of a movable mirror (5) of an optical system, which moveable mirror is used to reflect a light beam producing images which are observed by a user, characterized in that it includes at least one holographic element (6, 7) which is arranged on a small part of the mirror and thus deviates a small part of the light beam, after reflection on the mirror, towards a corresponding sensor (9, 10) arranged outside the field of view relating to the mirror (4), and in that the Bragg angle of each holographic element is the angle (A) formed between the direction (19) in which the mirror would, in the absence of the said holographic element, reflect the incident rays, and the direction (20) of the corresponding sensor.

2. Device according to Claim 1, characterized in that each holographic element is recorded on a layer of photosensitive material deposited on a substrate (17) which is transparent to the wavelengths used and is adhesively bonded to the mirror.

3. Device according to one of the preceding claims, characterized in that each sensor (9, 10) is an optoelectronic sensor of the type having four quadrants.

4. Device according to one of the preceding claims, characterized in that the mirror is a combiner mirror.

5. Device according to Claim 4, characterized in that the combiner mirror is a spherical collimation mirror.

6. Device according to Claim 4 or 5, characterized in that it forms part of a head-up display.

7. Device according to Claim 6, characterized in that each sensor is connected to a device (8, 11) for slaving the position and/or orientation of the moveable mirror or the position of the image source.

8. Device according to one of the preceding claims, characterized in that, in correspondence with each holographic element, the image source (1) includes, close to the edge of its working surface, a small region covered with a phosphor emitting in the infrared.
